(19) Europäisches Patentamt
European Patent Office
Office européen des brevets

(11) **EP 4 542 206 A1**

(12) **EUROPEAN PATENT APPLICATION**

(43) Date of publication:
23.04.2025 Bulletin 2025/17

(21) Application number: 24204428.7

(22) Date of filing: 03.10.2024

(51) International Patent Classification (IPC):
*G01N 21/88* (2006.01)　　　　*G01N 21/90* (2006.01)

(52) Cooperative Patent Classification (CPC):
**G01N 21/8806; G01N 21/8851; G01N 21/90;**
**G01N 21/9027;** G01N 2021/8887

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 04.10.2023　IT 202300020598

(71) Applicant: Antares Vision S.p.A.
25039 Travagliato (BS) (IT)

(72) Inventors:
• **MANIACI, Gianmarco**
25039 Travagliato (BS) (IT)
• **RENZI, Marco**
25039 Travagliato (BS) (IT)
• **BONA, Michele**
25039 Travagliato (BS) (IT)
• **CASTIONI, Guido Giovanni**
25039 Travagliato (BS) (IT)

(74) Representative: **Brunacci, Marco**
BRUNACCI & PARTNERS S.r.l.
Via Pietro Giardini, 625
41125 Modena (MO) (IT)

(54) **IMPROVED INSPECTION SYSTEM FOR OBJECTS**

(57)　The present invention relates to an inspection system (1) for objects characterized by the fact that it comprises a lighting apparatus (2) adapted to light up an inspection area (Z) where an object (O) to be inspected can be located, control means operatively connected to the lighting apparatus (2) and configured to activate/-deactivate the groups of emitters (3), an acquisition device (8) adapted to acquire a plurality of images of the object (O) and a processor (9) operatively connected to the acquisition device (8) and configured to receive the plurality of acquired images to combine them with each other in order to return at least one individual processed image of the object (O).

Fig.3

## Description

Technical Field

The present invention relates to an improved inspection system for objects. Specifically, the inspection system is used in order to identify the presence of possible defects in an object.

Background Art

As is well known, the detection of the presence of defects in an object is usually carried out by an experienced operator who, by moving the object to be inspected with respect to a light source, analyzes the surface in detail in order to detect the presence of any imperfections. By moving the object, the operator varies the angle of inclination at which the light intercepts the object, thus achieving a variety of lighting conditions which are capable of highlighting different areas of the object. Special inspection systems are also known provided with a light source adapted to light up the object to be inspected, a camera which acquires the image of the object and a mechanical manipulator which rotates the object to vary the orientation thereof with respect to the light source.

An example of such a type of inspection system is described in patent document US5519496.

However, the mechanical manipulators used in such solutions are often extremely slow and expensive to make and, what is more, they do not always allow the object to be effectively exposed to the various lighting conditions needed to detect defects in the object.

To partly overcome these problems, inspection systems are known which use a plurality of cameras positioned at different angles with respect to the object to be inspected so that images of different parts of the object can be acquired.

There are additional solutions using light emitters placed at different angles with respect to the inspection area.

Examples of these types of inspection systems are described in patent documents WO2016166668A1 and WO2011055397.

However, both of the aforementioned solutions have a variety of problems particularly related to the timing of inspection and to the fact that both the design and set-up phase of the machinery and the subsequent phase of analysis and inspection of the object are extremely complicated and laborious.

In addition, such known systems are often difficult to construct, erratic in operation and difficult to use by the user.

Added to this, such inspection systems are susceptible to continuous improvements aimed at increasing their effectiveness and at shortening inspection times.

Description of the Invention

The Applicant, already active in the inspection sector, has developed an improved inspection system which is the subject of application PCT/IB2023/053241 which allows the improved inspection system to generate beams of diffuse light radiation to illuminate the object according to different lighting conditions in order to acquire a plurality of images to be combined and/or fused together. The applicant found, however, that this solution had limitations in that the lighting was always carried out by activating all the emitters of a certain group of emitters distributed along the respective circumference arc of the spherical cap. In particular, in a first lighting condition the first group of emitters was activated while the second group was deactivated and, in a second lighting condition, the second group of emitters was activated while the first group of emitters was deactivated.

The applicant has therefore thought of an improvement of the previous solution by introducing lighting conditions that are more adaptable to specific needs in which specific sectors of emitters can be activated according to predefined combinations. The main aim of the present invention is to devise an improved inspection system which enables an even more highly detailed inspection of an object as error-free as possible.

Another object of the present invention is to achieve an improved inspection system for objects capable of rapidly generating a high-contrast image of an object to be inspected.

Another object of the present invention is to devise an improved inspection system for objects which can overcome the aforementioned drawbacks of the prior art within the framework of a simple, rational, easy and effective to use as well as affordable solution.

The aforementioned objects are achieved by this improved inspection system for objects having the characteristics of claim 1.

Brief Description of the Drawings

Other characteristics and advantages of the present invention will become more apparent from the description of a preferred, but not exclusive, embodiment of an improved inspection system for objects, illustrated by way of an indicative, yet non-limiting example, in the accompanying tables of drawings in which:

- Figures 1 and 2 are perspective views of a first embodiment of the improved inspection system for objects in accordance with the present invention,
- Figure 3 is a sectional view of the system in Figure 1,
- Figure 4 is a time diagram illustrating the operation of the system in Figure 1,
- Figure 5 is a front view of the lighting apparatus of the system in Figure 1 wherein the diffusion element has been removed for better clarity,
- Figure 6 is a perspective view of a second embodiment of the system in accordance with the present invention;

- Figure 7 is a frontal perspective view of the emitters of the system in Figure 6;
- Figure 8 is a rear view of the emitters of the system in Figure 6;
- Figure 9 shows a plan of an inspection machine in which the improved system of the invention is integrated.

Embodiments of the Invention

With particular reference to these figures, reference numeral 1 globally indicates an improved inspection system for objects.

The system 1 according to the invention allows the acquisition of a plurality of images of the object to be inspected by exposing it to different lighting conditions. The acquired images are then combined to each other to return a high-contrast processed image capable of enabling highly detailed inspection of the object.

Image analysis to detect the presence of possible defects in the object can be carried out by an experienced operator or by special algorithms configured to detect the presence of possible defects in the analyzed object.

The system 1 of the invention is configured for the inspection of objects O, preferably of the pharmaceutical liquid container type. Such inspections are particularly widespread in pharmaceutical industries where the correct storage of drugs is essential to maintain the chemical-physical characteristics of the latter unaltered in order to make them effective during their use and not harmful to health. Preferably, system 1 is used to verify the integrity and/or conformity of containers and/or their contents and, in the case of ascertained non-compliance, to reject non-compliant containers. Usually, the most common defects detected by such machines are the presence of imperfections, dark spots, air bubbles, scratches, damage or missing parts on the containers. Furthermore, the system can also be used to detect imperfections and/or defects in the product contained and/or any non-conformities affecting the labels of the containers and/or the presence of foreign bodies inside the containers. However, the use of system 1 for the inspection of different objects of particular value such as, for example, jewelry, sunglasses, eyeglasses, mobile devices, etc., is not excluded. Appropriately, the system 1 comprises a lighting apparatus 2 adapted to light up an inspection area Z where an object O to be inspected can be located. As described in detail in the following description, the lighting apparatus 2 is configured to generate, preferably sequentially, a plurality of beams of diffused light radiation to light up one object O to be inspected according to different lighting conditions.

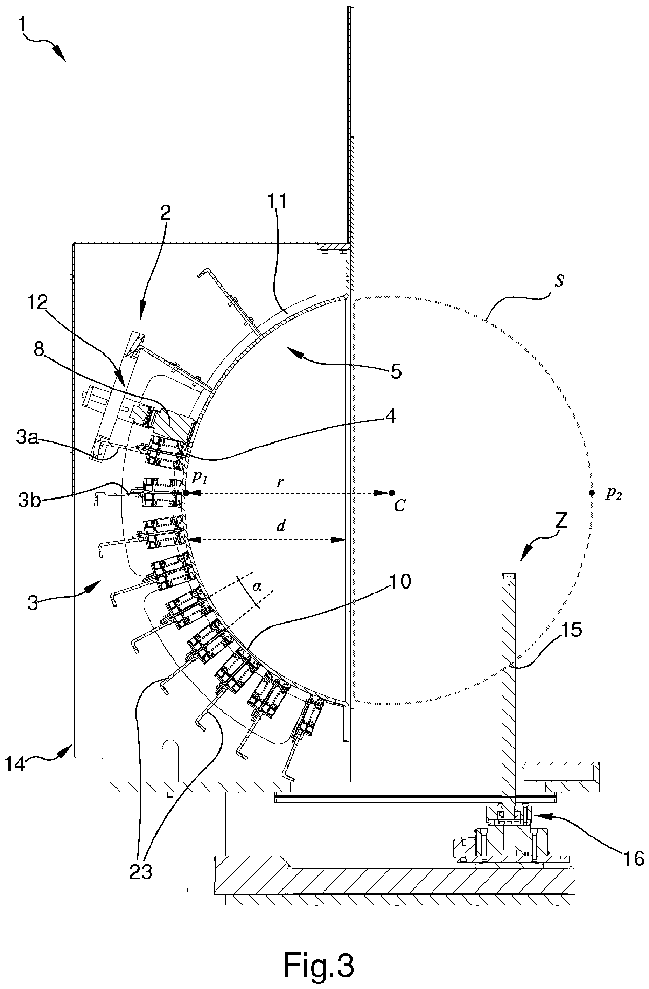

As shown in Figure 3, the lighting apparatus 2 comprises a plurality of groups of emitters 3, each provided with one or more emitters 4 configured to emit a light radiation towards the inspection area Z. Preferably, each group of emitters 3 comprises a plurality of emitters 4. Each emitter 4 is a device adapted to generate a light radiation which propagates substantially along at least one direction of propagation. Preferably, each emitter 4 is of the type of an electronic device adapted to generate a light radiation. Even more preferably, each emitter 4 comprises an LED emitting device.

Preferably, the light radiation emitted by emitters 4 is white light. However, other possible colors of light emission, such as red, green, blue, etc., are not excluded. Appropriately, each emitter 4 is directed towards the inspection area Z. In other words, each emitter 4 is positioned so as to substantially direct the emitted light radiation towards the inspection area Z.

As described in detail later in the description, the groups of emitters 3 are arranged, with respect to the inspection area Z, according to different placements and/or orientations with respect to each other. In this way, the light radiation emitted by each group of emitters 3 lights up the object differently from the other groups of emitters 3, so that a plurality of lighting conditions can be achieved. Appropriately, the lighting apparatus 2 comprises a diffusion element 5 positioned between the plurality of groups of emitters 3 and the inspection area Z. The diffusion element 5 is configured to be at least partly traversed by the light radiation and to diffuse the light radiation passing through it.

Conveniently, the diffusion element 5 defines a concavity 6 facing the inspection area Z. This concavity 6 allows the diffused light radiation to be substantially directed towards the inspection area Z.

As can be seen from Figure 3, the diffusion element 5 is arranged along the direction of propagation of the light radiation emitted by each group of emitters 3 to intercept and diffuse it, preferably towards the inspection area Z, by broadening and/or equalizing it. In actual facts, through the diffusion element 5 the light beams are more diffused towards the object to be inspected. Appropriately, the system 1 is provided with control means (not shown) operationally connected to the lighting apparatus 2 and configured to activate/deactivate the groups of emitters 3 in order to achieve a plurality of lighting conditions. In other words, the control means are configured to activate/deactivate the light radiation emission of the plurality of groups of emitters 3. In actual facts, when a group of emitters 3 is activated, the related emitters 4 emit light radiation. On the contrary, when a group of emitters 3 is deactivated, the related emitters 4 are off, that is, they do not emit any light radiation.

Preferably, the control means are configured to activate/deactivate each group of emitters 3 independently of the other groups of emitters 3. For this purpose, preferably, the control means are configured to control each group of emitters 3 independently of the other groups of emitters 3. This means that, preferably, the control means are operationally connected in parallel to each group of emitters 3. It cannot, however, be ruled out that the control means may be configured to emit an individual activation signal that activates the groups of emitters 3 sequentially. Preferably, the emitters 4 of the plurality of groups of emitters 3 emit radiation having substantially the same wavelength. Preferably, each emitter 4 emits a light radiation having a wavelength of between 400 nm and 750 nm.

It cannot, however, be ruled out that the emitters 4 may emit light radiation having different frequencies from each other.

Preferably, the control means are of the type of an electronic control device such as e.g. a PLC, a microcontroller, an electronic control unit, a microprocessor, a PC and/or the like.

Preferably, the control means are operationally connected to the lighting apparatus 2 via a wired, pilot-cable, wireless, Bluetooth, infrared connection and/or the like.

Conveniently, the system 1 is provided with an acquisition device 8 adapted to acquire a plurality of images of the object O positioned in the inspection area Z. In particular, the acquisition device 8 is adapted to acquire the plurality of images of the object O at least when the control means achieve the plurality of lighting conditions. In the present case, the acquisition device 8 is configured to acquire at least one image of the object O for each of the lighting conditions achieved by the control means 7. In other words, the control means activate, preferably sequentially, the groups of emitters 3 to create different lighting conditions, and for each lighting condition, the acquisition device 8 acquires at least one image of the object positioned in the inspection area Z. In doing so, the plurality of images acquired comprises different images of the object O wherein the object O itself is exposed to different lighting conditions.

According to one version, the duration of each light radiation (corresponding to the exposure time of the acquisition device), is of between 1ms to 5ms at the frequency of 50 fps.

Preferably, the acquisition device 8 comprises a camera. For example, the camera can be a camera of the color or B/W CMOS technology type.

Advantageously, the system 1 comprises a processor (not shown) operationally connected to the acquisition device 8 and configured to receive the plurality of acquired images to combine them with each other in order to return at least one individual processed image of the object O. In particular, the processor is configured to fuse the acquired images together to return a high-contrast image. Preferably, the processor is configured to process the plurality of images in order to obtain a high-dynamic range image, i.e., an image having a greater brightness interval between the brightest and the least bright areas of the image than the images of the plurality of acquired images.

For this purpose, the processor performs a fusion or HDR algorithm adapted to combine the plurality of images to obtain the individual processed image. Specifically, the algorithm receives the plurality of acquired images at input and returns a fused image. Preferably, the processor comprises one or more fusion or HDR algorithms.

The acronym "HDR" is used to refer to algorithms that exploit the high-dynamic range technique of combining multiple images, subjected to different lighting conditions, to obtain an image wherein the dynamic range is wider than that of the acquired images.

Instead, the term "fusion" refers to algorithms that process a plurality of images of the same subject to obtain a fused image. Such a fused image is obtained by combining individual pixels selected from the plurality of images depending on predetermined comparison parameters. A fusion algorithm substantially selects the "best" pixels from the plurality of acquired images to combine them with each other and to obtain a so-called "fused" image. The selection of the best pixels is made as a function of certain parameters that characterize pixels, such as e.g. contrast, saturation and brightness, etc.

The term "pixel" means an individual element, area or zone into which the image is divided. In other words, the term "pixel" indicates a unit of subdivision of the image.

Through the fusion algorithm, the processor is configured to subdivide each acquired image into a plurality of pixels. The pixels of each image are identified by means of the assignment of a coordinate within a coordinate system. In this case, each image is divided into an array of pixels and each pixel is identified by means of a pair of numbers indicating the row and column in which such pixel is located.

Next, the processor compares the pixels of the plurality of images which are identified by the same coordinate with each other to select one depending on a rank. Finally, the processor combines the selected pixels together to obtain a fused image.

The pixel comparison and selection operation is carried out by ranking the pixels according to one or more parameters of interest. Preferably, the parameters of interest are at least one out of brightness, contrast and saturation.

Pixel ranking involves assigning a preferred range of values for each parameter. Then, for each pixel, the value of such a parameter is measured and a score is assigned depending on its proximity to such a preferred range of values.

For each coordinate, the processor selects the pixel with the highest score and finally combines all the selected pixels to obtain the fused image.

In the event of the parameters of interest being more than one, the scores assigned for each parameter are added together to obtain a final score. In such a case, pixel selection is made by selecting the pixel with the highest final score.

Preferably, once the fused image is obtained, the processor is configured to equalize and harmonize the image obtained.

Preferably, the processor is of the type of an electronic processing device such as e.g. a PLC, an electronic control unit, a microprocessor, a PC and/or the like.

Preferably, the system 1 comprises a database, not shown in the figures, adapted to store the acquired images and/or the processed image. For this purpose, the database is operationally connected to the processor and/or to the acquisition device 8.

In one or more embodiments, the processor, the control means and/or the database may coincide with each other and/or be part of the same processing unit.

As anticipated above, the plurality of groups of emitters 3 comprises at least a first group of emitters 3a and at least a second group of emitters 3b.

The control means are adapted to achieve a plurality of lighting conditions wherein:

- in a first lighting condition the first group of emitters 3a is activated and the second group of emitters 3b is deactivated, and
- in a second lighting condition, the second group of emitters 3b is activated and the first group of emitters 3a is deactivated.

The acquisition device 8 is configured to acquire a first image when the first lighting condition is achieved, and a second image when the second lighting condition is achieved.

Preferably, the plurality of groups of emitters 3 comprises a predefined number N of groups of emitters 3. In such a case, the control means are configured to achieve at least a predefined number N of lighting conditions wherein for each lighting condition a different group of emitters 3 is activated and, preferably, the remaining groups of emitters 3 are deactivated. In other words, the control means are configured to achieve a number of lighting conditions equal to the number of groups of emitters 3. For each lighting condition, the acquisition device 8 acquires at least one image of the object to be inspected. In the present case, the control means are operationally connected to the acquisition device 8 and are configured to activate/deactivate the acquisition device 8 in order to synchronize the acquisition of the plurality of images with the achievement of the plurality of lighting conditions.

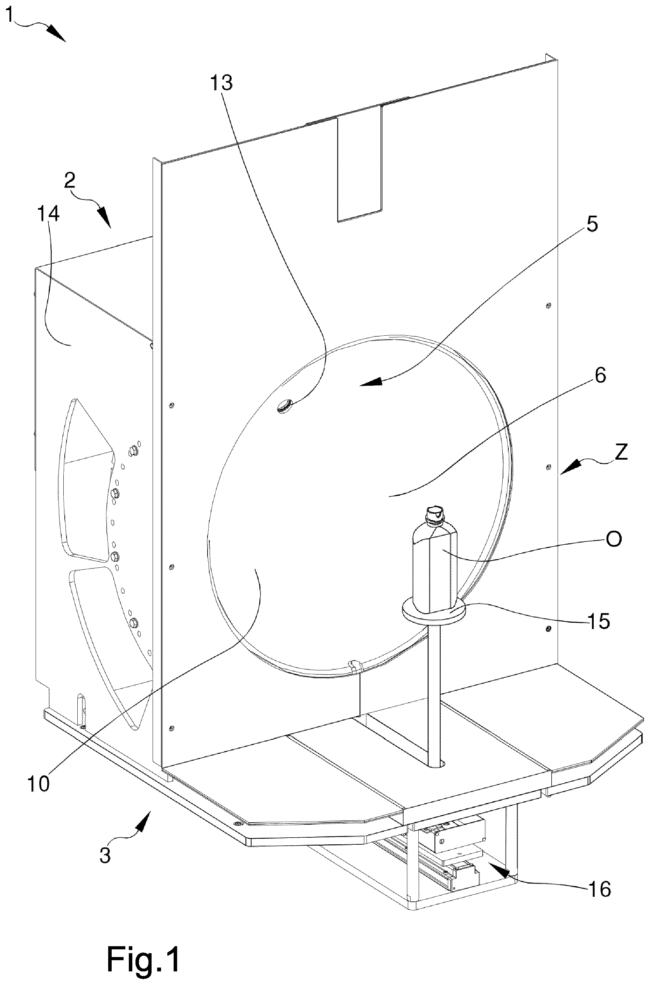

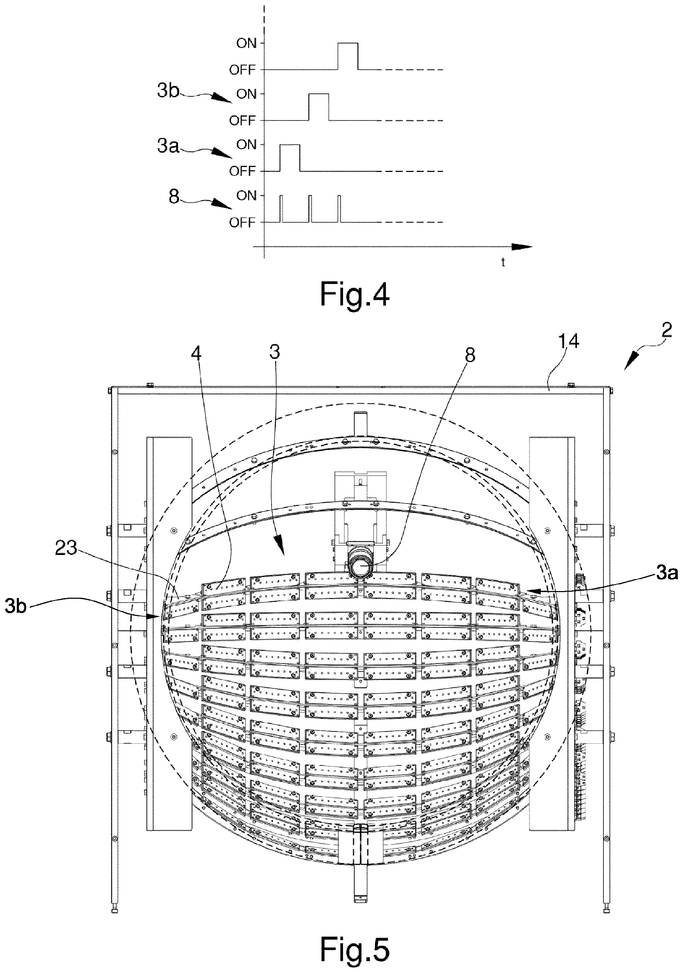

According to the embodiment shown in the Figures 1-5, the plurality of groups of emitters 3 comprises nine groups of emitters 3 equidistant from each other by an angle $\alpha$ of about 10°. It cannot however be ruled out that the plurality of groups of emitters 3 may comprise a larger or fewer groups of emitters.

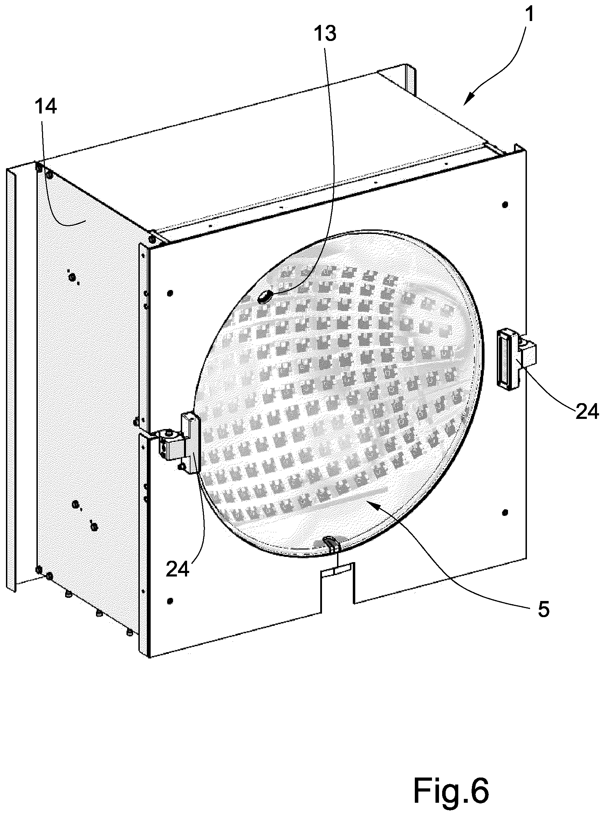

Usefully, as shown in Figure 6, for each lighting condition, the control means are configured to activate the respective group of emitters 3 for an activation time of between 1 ms and 5 ms.

In addition, the control means are configured to let a time period of between 10 ms and 150 ms, preferably 30 ms, elapse between two successive lighting conditions. This time period relates to the time elapsing between the deactivation of the group of emitters 3 of one lighting condition and the activation of the group of emitters 3 of a subsequent lighting condition.

As anticipated above, the diffusion element 5 is adapted to diffuse the light radiation passing through it. For this purpose, the diffusion element 5 comprises at least one layer of diffuse transmission, that is, a layer that transmits the light radiation in a diffuse manner. In the present case, the diffusion element 5 is made at least partly of Plexiglas. Even more preferably, the diffusion element 5 is made entirely of Plexiglas.

The use of a diffusion element 5 allows the creation of a light beam, thus preventing the light radiation emitted by the emitters 4 from directly lighting up the object to be inspected. Thus, the emitters 4 light up the object to be inspected in an indirect manner.

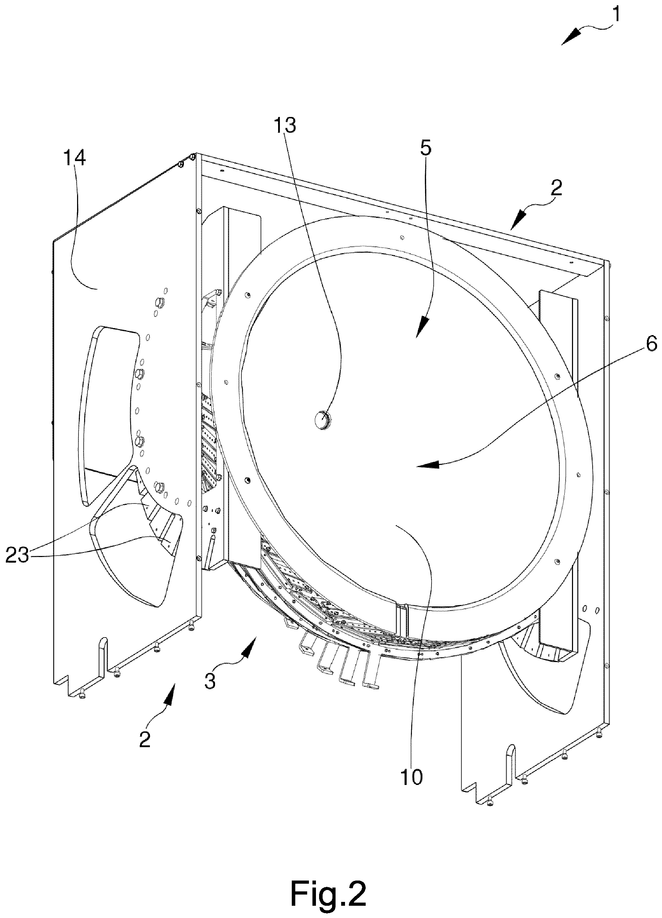

As visible from Figures 1 and 2, the diffusion element 5 has a diffusion surface 10 which is of substantially hemispherical or semispherical shape. Specifically, the diffusion element 5 has a dome or semispherical cap shape whose diffusion surface 10 defines a concavity 6 axially facing the inspection area Z. Conveniently, the inspection area Z is arranged substantially at the center of the concavity 6 defined by the diffusion surface 10. Preferably, taken as a reference a Cartesian system whose center of axes corresponds to the center C of the imaginary sphere 5 containing the spherical dome of the diffusion element 5, the inspection area Z is arranged substantially where the IV quadrant is located. In even more detail, the inspection area Z is arranged inferiorly to the imaginary horizontal plane passing through the center C.

In the context of this disclosure, the terms "upper" and "lower", "front", "rear", "vertical" and "horizontal", used with reference to the system 1, are meant to refer to the conditions under which the system is normally used, i.e., those shown in Figure 3.

Preferably, the diffusion element 5 has a semispherical dome shape with an imaginary intersecting plane which passes vertically at a distance d from the pole $p_1$ (or the center C) of the diffusion element 5 that is less than the radius r. The intersecting plane substantially defining the base of the semispherical dome of the diffusion element 5 is thus offset from the center C. Even more preferably, the intersecting plane of the diffusion element is offset from the center C by a distance $d$ of between $\frac{1}{2}r$ and r, preferably $\frac{4}{5}r$. Such a conformation of the diffusion element 5 makes it possible to generate a light radiation which is diffused not only axially towards the center of the concavity 6 defined by the diffusion surface 10 but also more concentrated towards the outer pole $p_2$ of the imaginary sphere 5 containing the spherical dome of the diffusion element 5, more specifically towards the IV quadrant in the inspection area Z.

In this case, the diffusion surface 10 has at least one radius of between 400 mm and 1000 mm, preferably 700 mm.

Preferably, the diffusion element 5 comprises an outer surface 11 opposite the diffusion surface 10 and facing the emitters 4.

Conveniently, each group of emitters 3 comprises a plurality of emitters 4 arranged around the diffusion element 5. In other words, the emitters 4 are arranged substantially aligned with each other on one or more lines substantially parallel to the diffusion surface 10. In addition, the emitters 4 face the outer surface 11 of the diffusion element 5.

In the present case, each group of emitters 3 comprises a plurality of emitters 4 arranged substantially aligned and equidistant from each other along its own arc of circumference. In particular, the arc of circumference defined by each group of emitters 3 is substantially parallel to the diffusion surface 10. Preferably, the arc of circumference has a center substantially coincident with the center C of the imaginary sphere 5 containing the spherical dome of the diffusion element 5. Preferably, each arc of circumference defined by each group of emitters 3 is contained within an imaginary rotating plane passing through the center C of the imaginary sphere 5 containing the spherical dome of the diffusion element 5. In particular, each arc of the circumference is contained in a corresponding plane of a set of planes that intersect along a particular common line.

Preferably, each group of emitters 3 is equidistant from an adjacent group of emitters 3 by an angle $\alpha$ of between 8° and 12°, preferably of about 10°.

It cannot, however, be ruled out that each arc of circumference may be arranged substantially vertically.

Preferably, each group of emitters 3 comprises one or more rows of emitters 4 wherein each row comprises a plurality of emitters 4 aligned along a respective arc of circumference. Even more preferably, each group of emitters 3 comprises a plurality of rows of emitters 4. Still, each group of emitters 3 comprises a pair of rows of emitters 4.

As visible, the groups of emitters 3 are distributed along the diffusion surface 10 on lines of longitude, or also called meridians. Such lines of longitude are substantially horizontal. It cannot, however, be ruled out that the lines of longitude may be substantially vertical.

In the present case, the one or more arcs of circumference which are defined by each group of emitters 3 lie substantially on a plane belonging to a bundle of proper planes. The term "bundle of proper planes" means a set of planes having a straight line substantially in common. Preferably, such a straight line in common is substantially horizontal. Moreover, such a straight line in common passes substantially through the inspection area Z.

The groups of emitters 3 are spaced apart from each other along a vertical direction by a predefined stretch such that the light radiation emitted by two neighboring groups of emitters 3, when diffused by the diffusion element 5, generate two light beams that partly overlap to each other.

With reference to the first embodiment shown in the examples in figures 1-5, the first group of emitters 3a comprises a row of emitters 4 aligned along a respective arc of circumference. Specifically, the first group of 3a emitters includes six arrays of eight LEDs. Each array consists of a row of LEDs in a 1x8 configuration, i.e. distributed in a single row. It follows that the first group of 3a emitters has forty-eight LEDs.

The second group of emitters 3b, arranged below the first group of emitters 3a, also includes a row of emitters 4 aligned along a respective arc of circumference. In particular, the second group of emitters 3b includes eight arrays of eight LEDs. Each array consists of a row of LEDs in a 1x8 configuration, i.e. distributed in a single row. It follows that the second group of emitters 3b has sixty-four LEDs.

Preferably, emitter groups 3a and 3b are repeated downwards in succession, i.e. one row after the other. In detail, the first group of 3a emitters are eight in number; similarly, the second group of 3b emitters are eight in number.

Overall, in the vertical direction, the arrays of emitter groups 3a and 3b are distributed overlapping each other in parallel columns, with the exception of the lateral arrays present only in the second emitter group 3b.

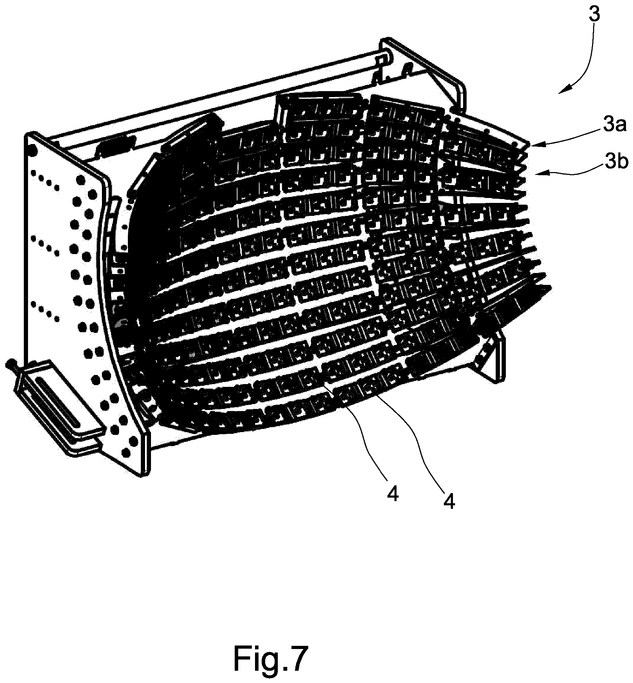

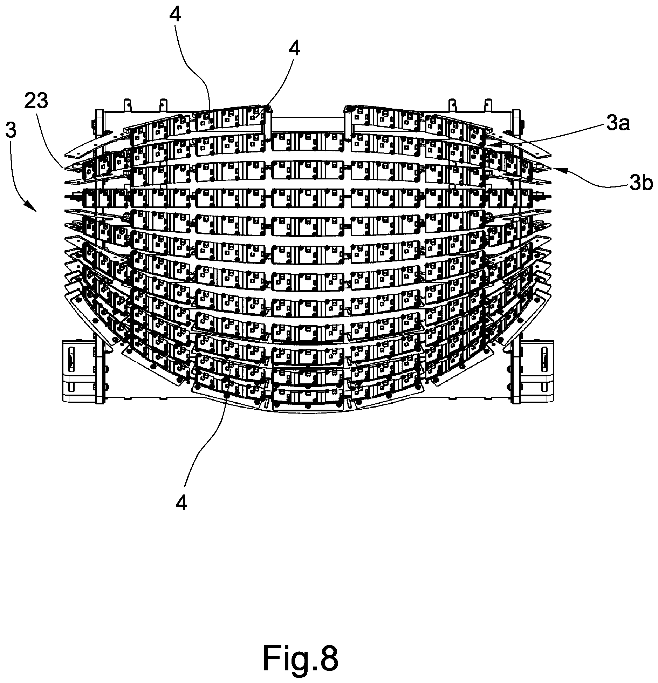

With reference to the second embodiment illustrated in the examples in figures 6-8, the first group of emitters 3a comprises a row of emitters 4 aligned along a respective arc of circumference. Each emitter 4 includes at least two LEDs. In the form illustrated and preferred, each emitter 4 comprises four LEDs arranged equally distributed in a 2x2 array. However, a higher number of LEDs is not excluded, such as, for example, in 3x3, 4x4, 5x5 configurations, and so on.

In detail, the first group of 3a emitters includes fifteen arrays of four LEDs in a 2x2 configuration. Preferably, the arrays are supported in sub-assemblies by three arrays for ease of replacement in the event of breakage. It follows that a row of a first group of 3a emitters is composed of five subgroups of arrays, in which each subgroup contains three arrays, for a total of fifteen arrays of LEDs, each array in a 2x2 configuration.

The second group of emitters 3b, arranged below the first group of emitters 3a, also includes a row of emitters 4 aligned along a respective arc of circumference. In particular, the second group of 3a emitters includes twenty-one arrays of four LEDs in a 2x2 configuration. Also for the second emitter group 3b, arrays are supported in subgroups of three arrays. It follows that a row of a second group of emitters 3b is composed of seven subgroups of arrays, in which each subgroup contains three arrays, for a total of twenty-one arrays of LEDs, each array in a 2x2 configuration.

Preferably, emitter groups 3a and 3b are repeated downwards in succession, i.e. one row after the other. In detail, the first group of 3a emitters are six in number; similarly, the second group of emitters 3b are six in number.

Overall, in the vertical direction, the emitter subgroups (composed of three arrays) of emitter groups 3a and 3b of the second embodiment are distributed one on top of the other in parallel columns, with the exception of the lateral arrays present only in the second emitter group 3b.

As anticipated above, preferably, the groups of emitters 3 are activated sequentially. In other words, the groups of emitters 3 are activated one at a time. Preferably, the groups of emitters 3 are activated starting from the group of emitters 3 arranged in the lowest position up to that arranged in the highest position.

It cannot, however, be ruled out that the groups of emitters 3 may be activated in a different order.

As visible from Figure 3, the acquisition device 8 is arranged where the lighting apparatus 2 is located. In detail, the acquisition device 8 is arranged where the diffusion element 5 is located. In detail, the acquisition device 8 is associated with the diffusion element 5. The diffusion element 5 has a through hole 13 where the acquisition device 8 faces so that it can acquire the image of the object O lit up by the lighting apparatus 2.

Preferably, the through hole 13 is arranged superiorly to the plurality of groups of emitters 3. It cannot, however, be ruled out that the through hole 13 may be arranged in the middle or inferiorly to the plurality of groups of emitters 3.

As shown in Figures 1, 3 and 6, the system 1 comprises a supporting frame 14 adapted to hold at least the diffusion element 5, the groups of emitters 3 and/or the acquisition device 8.

Preferably, the groups of emitters 3 are mounted on the supporting frame 14 where the diffusion element 5 is located. It cannot, however, be ruled out that the groups of emitters 3 may be mounted directly on the diffusion element 5.

In the present case, the supporting frame 14 comprises a plurality of uprights arranged where the diffusion element 5 is located. Each upright 23 is adapted to hold at least one group of emitters 3.

In addition, the supporting frame 14 has a housing 12 adapted to receive at least part of the acquisition device 8.

As shown in Figure 1, the system 1 comprises a holding element 15 arranged where the inspection area Z is located and adapted to hold the object O to be inspected.

According to one or more embodiments, the system 1 comprises movement means 16 operationally connected to the support element 15 and therefore configured to move the object to be inspected in order to vary the orientation/distance thereof with respect to the acquisition device 8 and/or to the lighting apparatus 2. For this purpose, the movement means 16 are moved in/away from the diffusion element so that the object O can be positioned at the point of focus. According to one version, the handling equipment 16 is operationally connected to the holding element 15 to rotate it around its own axis. The movement means may be e.g. of the type of a robotic arm.

According with the embodiment shown in the example in Figure 6, the lighting apparatus 2 comprises at least one additional emitter 24 configured to perform light radiation in grazing light. Preferably, grazing light radiation is red in color. However, other possible grazing light emission colours are not excluded, such as white, green, blue, etc.

As shown, the additional emitter 24 is positioned at the inspection zone Z and fixed externally to diffusion element 5 on the imaginary intersecting plane that defines the base of diffusion element 5. More specifically, taking the inspection zone Z as a reference point, the additional emitter 24 can be positioned at any circumferential point of the base of the diffusion element 5 in order to direct the light radiation radially towards its center C. As visible, the additional emitter 24 is swiveling, i.e. the light radiation can be directed both radially and offset. In a preferred form, the additional emitter 24 can be rotated around a vertical axis so that the light radiation is directed transversely and substantially along the intersecting plane. According to a version, lighting apparatus 2 comprises two additional emitters 24 arranged diametrically opposite. However, a greater number of additional emitters 24 is not excluded, and arranged, for example, in a radial pattern.

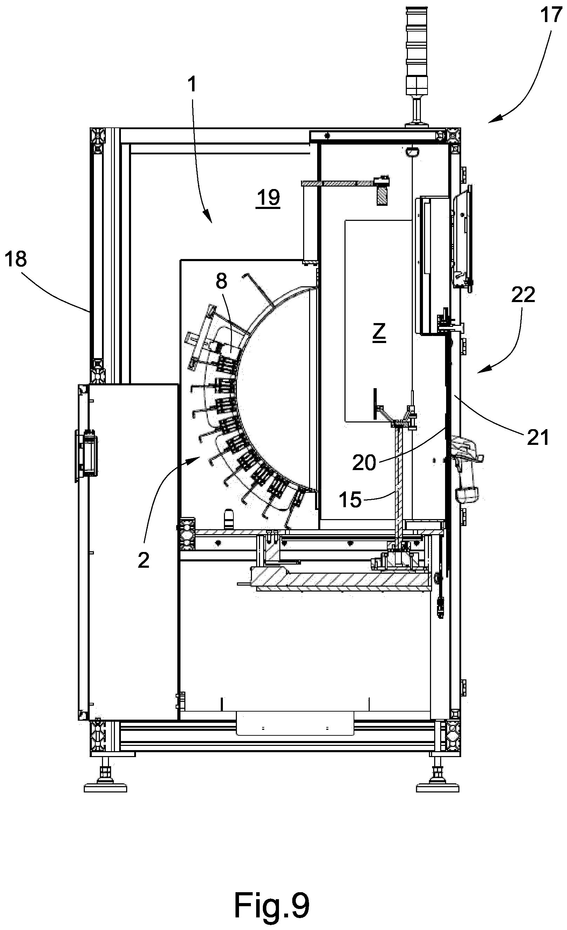

According to one aspect of the present invention, the system 1 is integrated within an inspection machine 17 shown in Figure 9.

In the present case, the machine 17 comprises a framing 18 which encloses at least part of the system 1. In particular, the framing 18 defines at least one housing compartment 19 which is adapted to house at least the lighting apparatus 2, the acquisition device 8 and the inspection area Z.

Usefully, the machine 17 has a dimming wall 20 arranged downstream of the inspection area Z with respect to the direction of propagation of the lighting radiation emitted by the emitters 4. In actual facts, the inspection area Z is positioned between the diffusion element 5 and the dimming wall 20.

Such a dimming wall 20 allows making a background for better image acquisition of the object to be inspected.

As visible from Figure 9, the machine 17 comprises an inlet opening 22 where the inspection area Z is located by means of which the operator can place the object O to be inspected on the holding element 15. In addition, the machine 17 comprises a door 21 where the inlet opening 22 is located and configured to open/close the latter.

The operation of the improved inspection system 1 in carrying out the process according to the invention is as follows.

Specifically, the operator positions the object O to be inspected in the inspection area Z by placing it on the holding element 15.

Next, the movement means 16 are moved to position the object O at the point of focus.

At this point, the lighting apparatus 2 generates a first lighting condition by activating at least one group of emitters 3. Specifically, the first lighting condition is generated by activating the first group of emitters 3a. Preferably, in the first lighting condition, the remaining groups of emitters 3 are deactivated. Preferably, the first lighting condition is generated by the control means.

When the first lighting condition has been generated, the system 1 acquires at least a first image of the object O. Preferably, this acquisition is carried out by the acquisition device 8.

Next, the lighting apparatus 2 generates a second lighting condition by deactivating the previously activated first group of emitters 3a and by activating another group of emitters 3. Specifically, the second lighting condition is generated by activating the second group of emitters 3b. Preferably, in the second lighting condition, the remaining groups of emitters 3 are deactivated. Preferably, the second lighting condition is generated by the control means.

When the second lighting condition has been generated, the system 1 acquires at least a second image of the object. Preferably, such acquisition is carried out by means of the acquisition device 8.

Finally, the first and second images are combined with each other in order to return an individual processed image of the object O. Preferably, such combination is carried out by means of the processor. Advantageously, such combination is carried out by means of an HDR algorithm.

Preferably, the system 1 involves the generation of a plurality of lighting conditions and, for each lighting condition, at least one image of the object O to be inspected is acquired. The images of the plurality of images are, finally, combined with each other to return an individual processed image of the object O.

According with a preferred embodiment, the operation of the improved system 1 according to the invention provides the acquisition of a plurality of images (preferably thirty-three) by setting different lighting conditions so that the group of emitters 3 are activated sequentially first from top to bottom and, subsequently, the LED arrays are activated from right to left. In the following, the term "vertical lighting condition" means the lighting condition in which group of emitters 3 are activated sequentially from top to bottom and the term "horizontal lighting condition" means the lighting condition in which vertically overlapping LED arrays are activated sequentially from right to left, or vice versa.

In particular, the first vertical lighting condition is generated by activating all the arrays of the first group of emitters 3a, while the remaining groups of emitters 3 are deactivated. When the first vertical lighting condition has been generated, System 1 captures a first image of object O.

Subsequently, the illuminator apparatus 2 generates a second vertical lighting condition, deactivating the group of emitters 3a previously activated, and activating all the arrays of the second group of emitters 3b. In the second vertical lighting condition, the remaining group of emitters 3 are deactivated. When the second vertical lighting condition has been generated, system 1 captures a second image of the object.

The above vertical lighting conditions are repeated sequentially for all rows of group of emitters 3, 3b, i.e. sixteen in the first embodiment form and twelve in the second embodiment form.

When the vertical lighting condition is complete, the horizontal lighting condition begins.

In particular, the first horizontal lighting condition is generated by activating all the LED arrays arranged in the first column one above the other, while the remaining columns remain deactivated. When the first horizontal lighting condition has been generated, system 1 acquires an image of the object (which in the second embodiment will be the thirteenth image).

Subsequently, the illuminator 2 generates a second horizontal lighting condition, deactivating the first column of arrays previously activated, and activating the second column of arrays adjacent. In the second horizontal lighting condition, the remaining array columns are disabled. When the second horizontal lighting condition has been generated, system 1 acquires a further image of the object (which in the second form embodiment will be the thirteenth image).

The above-mentioned conditions of horizontal illumination from the left and right are repeated sequentially for all the columns of arrays, which in the second form of realization will therefore be a total of twenty-one.

At the end, all thirty-three images acquired are combined with each other in order to return a single processed image of object O. Preferably, this combination is carried out by the processor 9. Advantageously, this combination is carried out by an HDR algorithm.

Optionally, the operation includes an additional condition in which the additional emitters 24 of grazing light are activated and an additional image is acquired to identify any dust in the object. This additional image can be subtracted from the single image processed to discriminate the dust.

If the object is to be photographed from several orientations, the aforementioned steps are repeated. In this case, the two individual processed images of object O are further processed and analyzed in order to identify various types of defects (scratches, holes, dirt, stains, etc.).

It has in practice been ascertained that the described invention achieves the intended objects, and in particular, the fact is emphasized that by means of the improved inspection system, a high-contrast image of an object to be inspected can be quickly generated.

## Claims

1. Improved inspection system (1) for objects **characterized by** the fact that it comprises:

   - a lighting apparatus (2) adapted to light up an inspection area (Z) where an object (O) to be inspected can be located and comprising:

     - a plurality of groups of emitters (3), each provided with one or more emitters (4) configured to emit, sequentially, a light radiation towards the inspection area (Z), and
     - a diffusion element (5) positioned between the plurality of groups of emitters (3) and the inspection area (Z) and provided with a concavity (6) facing the inspection area (Z), the diffusion element (5) being configured to be at least partly traversed by the light radiation and to diffuse the light radiation passing through it;

   - control means operatively connected to the lighting apparatus (2) and configured to activate/deactivate the groups of emitters (3);
   - an acquisition device (8) adapted to acquire a plurality of sequentially images of the object (O);
   - a processor operatively connected to the acquisition device (8) and configured to receive the plurality of acquired images to combine them with each other in order to return at least one individual processed image of the object (O).

2. System (1) according to claim 1, **characterized by** the fact that the processor performs a fusion algorithm adapted to combine the plurality of images to obtain the individual processed image.

3. System (1) according to one or more of the preceding claims, **characterized by** the fact that:

   - the plurality of groups of emitters (3) comprises at least a first group of emitters (3a) and a second group of emitters (3b),
   - the control means are adapted to achieve a plurality of lighting conditions wherein:

     - in a first lighting condition the first group of emitters (3a) is activated and the second group of emitters (3b) is deactivated, and

     - in a second lighting condition the second group of emitters (3b) is activated and the first group of emitters (3a) is deactivated.

4. System (1) according to claim 3, **characterized by** the fact that the acquisition device (8) acquires at least one image of the object (O) for each of said lighting conditions.

5. System (1) according to claim 3 or 4, **characterized by** the fact that the acquisition device (8) is configured to acquire a first image when the first lighting condition is achieved, and a second image when the second lighting condition is achieved.

6. System (1) according to one or more of claims 3 to 5, **characterized by** the fact that the control means are operatively connected to the acquisition device (8) and are configured to activate/deactivate the acquisition device (8) in order to synchronize the acquisition of the plurality of images with each lighting condition.

7. System (1) according to one or more of the preceding claims, **characterized by** the fact that the diffusion element (5) has a spherical dome shape, the diffusion surface (10) of which defines a concavity (6) axially facing the inspection area (Z).

8. System (1) according to one or more of the preceding claims, wherein the diffusion element (5) has a semispherical dome shape with an imaginary intersecting plane which passes vertically at a distance (d) from the center (C) of the diffusion element (5) that is less than the radius (r).

9. System (1) according to the preceding claim, wherein the intersecting plane of the diffusion element (5) is offset from the center (C) by a distance (d) of between $\frac{1}{2}r$ and r, preferably $\frac{4}{5}r$.

10. System (1) according to one or more of the preceding claims, **characterized by** the fact that each of the groups of emitters (3) comprises a plurality of emitters (4) arranged substantially aligned and equidistant from each other along at least one arc of circumference.

11. System (1) according to claim 10, wherein each group of emitters (3) is equidistant from an adjacent group of emitters (3) by an angle ($\alpha$) of between 8° and 12°, preferably of about 10°.

12. System (1) according to one or more of the preceding claims, wherein, taken as a reference a Cartesian system whose center of axes corresponds to the center (C), the inspection area (Z) is arranged substantially where the IV quadrant is located.

13. System (1) according to one or more of the preceding claims, wherein the groups of emitters (3) are activated sequentially one at a time, preferably activated starting from the group of emitters (3) arranged in the lower position up to the one arranged in the upper position.

14. System (1) according to one or more of the preceding claims, wherein the processor is configured to fuse the acquired images together to return a high-contrast and high-dynamic range image.

Fig.1

Fig.2

Fig.3

Fig.4

Fig.5

Fig.6

EP 4 542 206 A1

Fig.7

16

Fig.8

Fig.9

## EUROPEAN SEARCH REPORT

**Application Number**

EP 24 20 4428

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IT 2022 0000 6344 A1 (ANTARES VISION S P A [IT]) 1 October 2023 (2023-10-01) * the whole document * & WO 2023/187733 A1 (ANTARES VISION S P A [IT]) 5 October 2023 (2023-10-05) * page 1, lines 3-5 * * page 3, lines 23-25 * * page 4, lines 9-12,21-23 * * page 5, lines 17-18 * * page 6, lines 3-13 * * page 8, lines 2-4,9-12,19,24 * * page 9, lines 17-19 * * page 9, line 31 - page 10, line 4 * * page 10, lines 6-11,21-23,30-31 * * figures 1,3 * | 1-14 | INV. G01N21/88 G01N21/90 |
| X | KR 2020 0016059 A (DEEDIIM SENSORS INC [KR]) 14 February 2020 (2020-02-14) * paragraphs [0001], [0007], [0014], [0060], [0065], [0068], [0076], [0128], [0132]; figures 1,3 * | 1-14 | |
| X | KR 2020 0004949 A (DEEDIIM SENSORS INC [KR]) 15 January 2020 (2020-01-15) * paragraphs [0001], [0002], [0011], [0031], [0054], [0065], [0066], [0092], [0103]; figures 4-12 * | 1-14 | **TECHNICAL FIELDS SEARCHED (IPC)** G01N |
| X A | WO 2021/156873 A1 (INSPEKTO A M V LTD [IL]) 12 August 2021 (2021-08-12) * paragraphs [0001], [0010], [0051], [0053], [0058], [0060], [0062], [0064], [0072], [0091] * | 1-6,11, 13,14 7-10,12 | |
| A | US 2015/355104 A1 (MATSUDA HAJIME [JP]) 10 December 2015 (2015-12-10) * paragraphs [0003], [0009], [0059], [0079], [0095], [0114], [0126] * | 1-14 | |

-/--

The present search report has been drawn up for all claims

| Place of search | Date of completion of the search | Examiner |
|---|---|---|
| Berlin | 7 March 2025 | Navas Montero, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 24 20 4428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/301145 A1 (WANG KEDAO [US]) 22 September 2022 (2022-09-22) * paragraphs [0001], [0003], [0015], [0023], [0025], [0037] - [0039], [0044], [0047], [0048], [0050], [0096]; figures 2,3 * | 1-14 | |

TECHNICAL FIELDS SEARCHED (IPC)

The present search report has been drawn up for all claims

| Place of search | Date of completion of the search | Examiner |
|---|---|---|
| Berlin | 7 March 2025 | Navas Montero, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 20 4428

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | Publication date | Patent family member(s) | Publication date |
|---|---|---|---|
| IT 202200006344 A1 | 01-10-2023 | NONE | |
| KR 20200016059 A | 14-02-2020 | NONE | |
| KR 20200004949 A | 15-01-2020 | NONE | |
| WO 2021156873 A1 | 12-08-2021 | BR 112022015599 A2 | 11-10-2022 |
| | | CA 3169874 A1 | 12-08-2021 |
| | | CN 115427790 A | 02-12-2022 |
| | | EP 4100726 A1 | 14-12-2022 |
| | | JP 2023521529 A | 25-05-2023 |
| | | KR 20220134019 A | 05-10-2022 |
| | | US 2023342909 A1 | 26-10-2023 |
| | | WO 2021156873 A1 | 12-08-2021 |
| US 2015355104 A1 | 10-12-2015 | JP 6403445 B2 | 10-10-2018 |
| | | JP 2015232479 A | 24-12-2015 |
| | | US 2015355104 A1 | 10-12-2015 |
| | | US 2017030839 A1 | 02-02-2017 |
| | | US 2017254758 A1 | 07-09-2017 |
| | | US 2017350827 A1 | 07-12-2017 |
| | | US 2018292327 A1 | 11-10-2018 |
| | | US 2019064078 A1 | 28-02-2019 |
| US 2022301145 A1 | 22-09-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5519496 A
- WO 2016166668 A1

- WO 2011055397 A